# EUROPÄISCHE PATENTSCHRIFT

(11) **EP 1 639 475 B1**
(45) Veröffentlichungstag und Bekanntmachung des Hinweises auf die Patenterteilung: **08.09.2010**
(21) Anmeldenummer: 04740540.2
(22) Anmeldetag: 01.07.2004
(51) Int. Cl.: G06F 12/02

(54) **PROZESSORARCHITEKTUR FÜR EXAKTE ZEIGERIDENTIFIZIERUNG**
PROCESSOR ARCHITECTURE FOR EXACT INDEX IDENTIFICATION
ARCHITECTURE DE PROCESSEUR POUR IDENTIFICATION EXACTE D'INDEX

(30) Priorität: 01.07.2003 DE 10329680
(43) Veröffentlichungstag der Anmeldung: 29.03.2006
(73) Patentinhaber: Universität Stuttgart, 70174 Stuttgart (DE)
(72) Erfinder: MEYER, Matthias, 71636 Ludwigsburg (DE)
(74) Vertreter: Gagel, Roland
(86) Internationale Anmeldenummer: PCT/EP2004/007175
(87) Internationale Veröffentlichungsnummer: WO 2005/003960

(56) Entgegenhaltungen:
- EP-A- 0 874 316
- EP-A- 0 874 318
- US-A- 4 334 269
- US-A1- 2001 010 071
- US-A1- 2002 169 556

## Beschreibung

### Technisches Anwendungsgebiet

Die vorliegende Erfindung betrifft eine Prozessorarchitektur, bei der der Zugriff auf einen Speicher über Zeiger erfolgt, die auf Objekte verweisen.

Die Beherrschung der Komplexität von Software ist die größte Herausforderung bei der Software-Entwicklung. Qualitativ hochwertige und zuverlässige Systeme sind nur dann realisierbar, wenn es gelingt, Software in überschaubare und beherrschbare Module zu zerlegen und abstrakt zu beschreiben. Um dies zu erreichen, werden seit einigen Jahren objektorientierte Programmiersprachen eingesetzt.

Ein zentrales Problem bei der Implementierung objektorientierter Programmiersprachen ist die dynamische Speicherverwaltung. Einige wenige objektorientierte Sprachen wie z. B. C++ bauen noch auf manuelle Speicherverwaltung, d. h. dass Speicher unter der Verantwortung des Programmierers sowohl angefordert als auch wieder frei gegeben wird. Dieser Ansatz hat jedoch den Nachteil, dass die problemangepasste, natürliche Modellierung eines Systems oft nicht möglich ist, da beim Entwurf des Systems auch die Speicherverwaltung realisiert werden muss. Weiterhin ist die manuelle Freigabe von Speicher Ursache einer ganzen Klasse von Programmfehlern. Wird bspw. ein Speicherbereich freigegeben, obwohl noch Verweise auf diesen Speicherbereich existieren, kann dies im weiteren Programmablauf katastrophale Folgen nach sich ziehen. Besonders gravierend ist hierbei, dass die Folgen der durch die noch existenten Zeiger auf den bereits frei gegebenen Speicherbereich (sog. dangling references) verursachten Fehler von vielen Faktoren abhängen und deshalb kaum zu reproduzieren und nur schwer zu lokalisieren sind. Aus diesen Gründen bauen fast alle modernen Programmiersprachen, wie bspw. Java, auf dynamische Speicherverwaltung mit automatischer Speicherbereinigung (sog. garbage collection). In Systemen mit dieser dynamischen Speicherverwaltung können Speicherbereiche nicht unter Verantwortung des Programms zurück gegeben werden. Statt dessen gibt ein Speicherbereiniger (garbage collector) die Speicherbereiche automatisch erst dann frei, wenn sie von einem Programm sicher nicht mehr referenziert werden. Dadurch können prinzipbedingt keine "dangling references" auftreten. Weiterhin erhöht der Einsatz dieser Technik die Produktivität der Programmierer, da diese sich nun vollständig der Lösung des eigentlichen Problems widmen können. Schließlich ist die erstellte Software von höherer Qualität, da die Wahrscheinlichkeit versteckter Programmfehler in einem System mit dynamischer Speicherverwaltung deutlich geringer ist als in einem System mit manueller Speicherverwaltung.

### Stand der Technik

Für die automatische Freigabe dynamisch angelegter Speicherbereiche existieren zahlreiche Algorithmen, die dem Fachmann unter den Begriffen Reference Counting, Copying und Mark Sweep Collection bekannt sind. Für einen Überblick über diese Algorithmen wird auf R. Jones, R. Lins: "Garbage Collection: Algorithms for Automatic Dynamic Memory Management", John Wiley & Sons, 1996, verwiesen.

Einfache Implementierungen dieser Algorithmen unterbrechen das Anwendungsprogrammm für die gesamte Dauer eines Speicherbereinigungszyklus. Sie verursachen in der Regel lange und unvorhersehbare Pausen in der Programmausführung und sind deshalb nicht für interaktive Systeme oder Echtzeitumgebungen geeignet.

Inkrementelle und nebenläufige Verfahren erlauben es, die Programmausführung während eines Speicherbereinigungszyklus fortzusetzen. Sie erfordern allerdings die Synchronisation zwischen Anwendungsprogramm und Speicherbereiniger. Die Kosten dieser Synchronisation in Software sind jedoch erheblich, da, je nach verwendetem Verfahren, entweder vor jedem Laden eines Zeigers (read barrier) oder vor jedem Speichern eines Zeigers (write barrier) eine kurze Codesequenz eingefügt werden muss, um festzustellen, ob das zugehörige Objekt vom Speicherbereiniger bereits bearbeitet wurde.

Viele inkrementelle Verfahren werden als "echtzeitfähig" beschrieben, weil die vom Speicherbereiniger verursachten Pausen in den meisten Fällen zu kurz sind, um vom Anwender registriert zu werden. Harte Echtzeitfähigkeit erfordert jedoch die Garantie einer konstanten oberen Schranke für die Antwortzeit eines Systems. Da software-basierte Verfahren in der Regel auf nicht unterbrechbare Operationen wie die Untersuchung aller Zeiger der Wurzelmenge (Register und Stapel) oder die Bearbeitung eines vollständigen Objekts angewiesen sind, genügen sie harten Echtzeitanforderungen nicht. Es sind zwar Software-Lösungen bekannt, die ohne atomare Operationen unbeschränkter Dauer auskommen, jedoch ist der Overhead dieser Lösungen an Rechenzeit und Speicher erheblich.

Ein grundsätzliches Problem aller Techniken zur automatischen Speicherbereinigung besteht im Auffinden und Identifizieren von Zeigern. Wenn Zeiger nicht eindeutig von Nicht-Zeigern unterschieden werden können, so lässt sich lediglich eine konservative Speicherbereinigung durchführen. Dies bedeutet, dass jedes Bitmuster, das einen Zeiger darstellen könnte, auch als Zeiger betrachtet werden muss, um die Freigabe von noch in Benutzung befindlichem Speicher zu vermeiden. Bei einer konservativen Speicherbereinigung dürfen daher keine kompaktierenden Verfahren eingesetzt werden, die Objekte verschieben und Zeiger aktualisieren. Ohne kompaktierende Verfahren wird der Speicher jedoch fragmentiert.

Zur Vermeidung dieser Problematik und zur Durchführung einer exakten Speicherbereinigung wird ein großer Aufwand bei der Suche und Identifizierung von Zeigern betrieben. Bei vielen objektorientierten Sprachen können Zeiger in Objekten über Typbeschreibungen (type descriptors) identifiziert werden, die in jedem Objekt enthalten sind. Die Lokalisierung von Zeigern im Programmstapel sowie in den Prozessorregistern ist jedoch schwieriger, insbesondere im Zusammenhang mit optimierenden Compilern. Es ist zwar möglich, Datenstrukturen zu unterhalten, in denen die Stapelpositionen und die Prozessorregister angegeben sind, die momentan Zeiger enthalten, jedoch sind die Kosten zur Aktualisierung derartiger Datenstrukturen während der Programmausführung sehr hoch. Aus diesem Grund verwenden die meisten software-basierten Verfahren vom Compiler erzeugte Tabellen, die die Lage der Zeiger im Programmstapel sowie in den Registern beschreiben. Für jeden Programmpunkt, an dem eine Speicherbereinigung durchgeführt werden könnte, wird ein Satz derartiger Tabellen erstellt. Die Realisierung dieser Technik führt jedoch zu einem beträchtlichen Aufblähen des Programmcodes. Weiterhin müssen Echtzeitsysteme sicher stellen, dass zu suspendierende Threads den nächsten derartigen Programmpunkt innerhalb einer begrenzten Zeitspanne erreichen.

Mit den bisher bestehenden Systemen, die in erster Linie auf eine automatische Speicherbereinigung in Software setzen, müssen somit zahlreiche Probleme bewältigt werden. Dies beruht vor allem darauf, dass die Software Funktionen nachbilden muss, die die zugrunde liegende Hardware nicht zur Verfügung stellt. Viele Probleme hinsichtlich Effizienz und Echtzeitfähigkeit können behoben werden, wenn der Prozessor selbst die automatische Speicherbereinigung ganz oder teilweise in Hardware durchführt. Dafür ist es jedoch zwingend erforderlich, dass der Prozessor Zeiger identifizieren kann.

Im Folgenden werden von den zahlreichen bekannten Architekturen lediglich zwei beispielhaft angeführt, die eine exakte Zeigeridentifizierung und/oder automatische Speicherbereinigung unterstützen und für den Gegenstand der vorliegenden Erfindung von Bedeutung sind.

So sind seit 1966 Architekturen bekannt, die sog. Capabilities an Stelle von direkten Zeigern einsetzen, um Speicherbereiche zu adressieren. Capabilities enthalten Angaben zur Zugangsberechtigung und Identifizierung von Objekten. Sie enthalten nicht die physikalische Adresse des Objekts, sondern einen Verweis auf einen Deskriptor, der den Ort, die Größe sowie weitere Eigenschaften des Objekts beschreibt. Ein Beispiel für einen Prozessor mit einer derartigen Architektur ist der Intel iAPX 432, wie er bspw. in H. M. Levy: "Capability-Based Computer Systems", Digital Press, 1984, Seiten 159 - 186, beschrieben ist. In dieser Architektur wird eine Capabilitiy durch einen zweistufigen Abbildungsprozess mit dem zugehörigen Objekt assoziiert. Für jedes Objekt existiert ein eindeutiger Eintrag in einer Objekttabelle, der den Ort, die Größe und den Zustand des Objekts beschreibt. Jedes Objekt besteht aus zwei Bereichen: Einem Datenbereich und einem Bereich für Capabilities. Auf diese Weise wird eine exakte Capability-Identifizierung ermöglicht.

Durch das Fehlen eines Registersatzes und die doppelt indirekte Adressierung eines Objekts über Capabilities und Objektdeskriptoren ist der iAPX 432 äußerst ineffizient. Weiterhin führt er selbst keine automatische Speicherbereinigung durch. Die Speicherbereinigung muss in Software erfolgen und ist nicht echtzeitfähig.

Alle bekannten Verfahren zur Identifizierung von direkten Zeigern verwenden in jedem Speicherwort ein spezielles Kennzeichnungsbit (tag) zur Unterscheidung von Zeigern und Nicht-Zeigern. Ein Beispiel dafür ist das in der US 5,560,003 A beschriebene System und Hardware-Modul für inkrementelle Speicherbereinigung in Echtzeit, das sich aus zwei Speicherbänken und einem Lokalprozessor zusammensetzt, der die Speicherbereinigung durchführt. Jede Speicherbank wird von einem sog. Objektraum-Manager unterstützt, der bei jedem Speicherzugriff die Startadresse des entsprechenden Objekts ermittelt. Aufgrund seiner Komplexität muss dieser Objektraum-Manager als getrenntes ASIC realisiert werden, das eine ähnliche Chipfläche beansprucht wie der Speicher selbst. Ein derartiges System ist sehr kostspielig. Weiterhin verursacht die Identifizierung von Zeigern mit Hilfe von Kennzeichnungsbits zusätzlichen Aufwand in Form von Rechenzeit und Speicherbedarf.

Die EP 0 874 318 A2 beschreibt ein Speicherbereinigungsverfahren, das - unterstützt von einem Compiler - durch ein Softwareprogramm realisiert wird, das von einem Prozessor ausgeführt wird. Das Programm nutzt eine Datenstruktur, in der Zeigerwerte von anderen Daten unterschieden werden können. Auch die EP 0 874 316 A2 offenbart ein Verfahren zur Speicherbereinigung auf Basis eines Softwareprogramms. Es handelt sich bei beiden Druckschriften also um eine Lösung, die auf eine automatische Speicherbereinigung in Software setzt.

Die US 2001/0010071 A1 offenbart einen Prozessor mit getrennten Daten- und Zeigerregistern. Bei diesem Prozessor ist es möglich, Daten in die Zeigerregister zu schreiben und umgekehrt. Die Druckschrift befasst sich weder mit einer objektbasierten Prozessorarchitektur, noch mit der Identifizierung von Zeigern und Objekten, noch mit der Problematik der Speicherbereinigung.

Die US 6473777 B1 beschreibt einen Koprozessor, der Funktionen einer JAVA virtual machine übernimmt, die auf einem Hauptprozessor ausgeführt wird. Hierzu zählt auch die Aufgabe der Speicherbereinigung. Der Koprozessor führt dabei lediglich Teile der Speicherbereinigung aus, nämlich bei einer so genannten "mark and sweep" Implementierung das "marking", während der Hauptprozessor das "sweeping" durchführt.

Wegen der ständig steigenden Komplexität der Software in eingebetteten Systemen werden seit einigen Jahren große Anstrengungen unternommen, die Vorteile der automatischen Speicherbereinigung auch diesem wirtschaftlich wichtigen Bereich zugänglich zu machen. Gerade in diesem Bereich der modernen Informationstechnik werden die größten Stückzahlen erzielt. Da die Produktzyklen durch ständige Innovation immer kürzer werden, steigt die Nachfrage nach robusten und echtzeitfähigen Plattformen für eingebettete Systeme für moderne objektorientierte Sprachen ständig. Allerdings wird die automatische Speicherbereinigung für diese Anwendungen in den meisten Fällen noch immer als ein Luxus betrachtet, den man sich trotz der unumstrittenen Vorteile der automatischen Speicherbereinigung nicht leisten kann.

Ausgehend von diesem Stand der Technik besteht die Aufgabe der vorliegenden Erfindung darin, eine Prozessorarchitektur für objektbasierte und objektorientierte Programme anzugeben, die eine kostengünstige exakte Zeigeridentifizierung ermöglicht und somit den Weg für eine effiziente und echtzeitfähige automatische Speicherbereinigung freigibt, die ganz oder teilweise in Hardware realisiert werden kann.

### Darstellung der Erfindung

Die Aufgabe wird mit der Prozessorarchitektur gemäß Patentanspruch 1 gelöst. Vorteilhafte Ausgestaltungen der Prozessorarchitektur sind Gegenstand der Unteransprüche oder lassen sich aus der nachfolgenden Beschreibung sowie den Ausführungsbeispielen entnehmen.

Im Rahmen der vorliegenden Patentanmeldung wird der Begriff Wort als Dateneinheit verstanden, die mittels einer einzigen Prozessoranweisung aus dem Speicher geladen oder im Speicher abgelegt werden kann. Unter einem Objekt wird eine zusammenhängende Menge an Speicherworten verstanden, in der jedes Wort exklusiv einem einzelnen Objekt angehört. Unter einem Zeiger wird ein Wort verstanden, das auf ein Objekt verweist. Der Begriff Null repräsentiert einen fest vorgegebenen Zeigerwert, der benutzt wird, um auf kein Objekt zu verweisen.

Bei der vorliegenden Prozessorarchitektur für objektbasierte und objektorientierte Programme erfolgt der Zugriff auf den Speicher ausschließlich über Zeiger, die direkt auf Objekte verweisen. Ein Objekt wird in einem zusammenhängenden Speicherbereich exklusiv abgelegt, d. h. die von zwei Objekten belegten Speicherbereiche dürfen sich nicht überlappen. In jedem Objekt werden Zeiger in einem Zeigerbereich und Daten in einem Datenbereich getrennt voneinander abgelegt. Darüber hinaus werden in jedem Objekt Informationen über die Länge des Zeigerbereichs und die Länge des Datenbereichs abgelegt. Diese Längeninformationen werden nachfolgend als Attribute bezeichnet. Mit Hilfe der Attribute ist es jederzeit möglich, die Größe eines Objekts zu bestimmen und die Zeiger und Daten in einem Objekt eindeutig voneinander abzugrenzen.

Die vorliegende Prozessorarchitektur stellt getrennte Zeigerregister- und Datenregistersätze zur Verfügung. Dabei sind Zeigerregister ausschließlich für Operationen mit Objekten wie bspw. für Speicherzugriffe vorgesehen und werden nicht für andere Aufgaben verwendet. Dadurch wird insbesondere sichergestellt, dass keine beliebigen Werte in Zeigerregister geschrieben werden und keine arithmetischen Operationen mit Zeigerregistern durchgeführt werden können.

Die Zeiger in den Zeigerbereichen der Objekte und in den Zeigerregistern enthalten direkt die Adresse der Objekte im Speicher.

Mit der vorliegenden objektbasierten Prozessorarchitektur wird auf diese Weise eine strikte Trennung von Zeigern und Nicht-Zeigern (Daten) realisiert, sodass eine exakte Zeigeridentifizierung ohne die Notwendigkeit von Kennzeichnungsbits möglich ist. Durch diese von der Hardware sicher gestellte exakte Identifizierbarkeit der Zeiger in den Prozessorregistern und im Speicher lässt sich eine automatische Speicherbereinigung auf Prozessorebene integrieren, die ganz oder teilweise in Hardware implementiert werden kann. Auf dieser Grundlage werden echtzeitfähige Systeme mit automatischer Speicherbereinigung möglich, die besonders effizient implementiert werden können. So ist weder für den Speicherbereinigungsalgorithmus selbst noch für die erforderliche Synchronisation zwischen Prozessor und Speicherbereiniger Software erforderlich, die auf dem Prozessor ausgeführt werden muss. Der Prozessor muss lediglich einen Teil der Speicherbandbreite an den Speicherbereiniger abtreten.

Ein weiterer Vorteil der Architektur besteht darin, dass die Speicherbereinigung ohne die Kooperation des Compilers und/oder des Laufzeitsystems auskommt und deshalb besonders robust implementiert werden kann.

Der Hardware-Aufwand für die Realisierung der Speicherbereinigung ist gemessen am Aufwand für den Prozessor selbst vergleichsweise gering. Aus diesem Grund können solche Prozessoren genauso wirtschaftlich wie herkömmliche Mikroprozessoren oder Mikrocontroller hergestellt werden.

Bei der vorliegenden Prozessorarchitektur wird durch den Prozessor gewährleistet, dass jedes als Zeiger identifizierte Wort entweder die Adresse eines existierenden Objekts beinhaltet oder Null ist. Durch die Prozessorarchitektur wird somit die feste Regel (Systeminvariante) eingehalten, dass einerseits jedes Speicherwort oder Register dahingehend identifiziert werden kann, ob es ein Zeiger ist oder nicht, und andererseits jeder Zeigerwert entweder Null ist oder die Adresse eines existierenden Objekts enthält. Durch das Einhalten dieser Systeminvariante wird die exakte Identifizierung der Zeiger im System zu jedem Taktzeitpunkt ermöglicht.

Vorzugsweise werden neue Objekte durch einen speziellen Objekterzeugungsbefehl angelegt, dem die Attribute des anzulegenden Objekts als Parameter übergeben werden. Dieser Objekterzeugungsbefehl initialisiert alle Zeiger des Zeigerbereichs mit dem Null-Wert, bevor auf das Objekt zugegriffen werden kann. Auf diese Weise wird die Systeminvariante nicht verletzt.

In einer Weiterbildung für harte Echtzeitanforderungen wird der Objekterzeugungsbefehl unterbrechbar implementiert, wobei beim Abbruch eines Objekterzeugungsbefehls unvollständig initialisierte Objekte derart erzeugt werden, dass der unterbrochene Objekterzeugungsbefehl zu einem späteren Zeitpunkt fortgesetzt werden kann und dass unvollständig initialisierte Objekte vom Prozessor in eindeutiger Weise gekennzeichnet werden.

Vorzugsweise werden von der Prozessorarchitektur konstante Objekte unterstützt, die bereits vor dem Programmstart als Teil eines nur lesbaren Speicherbereiches existieren. Zeiger auf konstante Objekte werden vom Prozessor in eindeutiger Weise gekennzeichnet.

Vorzugsweise wird bei der vorliegenden Prozessorarchitektur in bekannter Weise ein Bereich des Speichers für einen Programmstapel reserviert. Der Programmstapel wird hierbei in einen Zeigerstapelbereich und einen Datenstapelbereich unterteilt, wobei jeweils die erste nicht vom Stapel belegte Position durch einen Stapelindex angegeben wird, der in je einem reservierten Datenregister verwaltet wird.

Werden mehrere Stapel verwendet, so werden die Stapelindizes der momentan inaktiven Stapel vorzugsweise als Attribute in den zugehörigen Stapelobjekten abgelegt. Weiterhin werden die Stapelobjekte als sog. statische Objekte vorzugsweise nicht im Heap, sondern in einem vom Betriebssystem verwalteten statischen Speicherbereich abgelegt und Zeiger auf derartige Objekte (statische Zeiger) in besonderer Weise gekennzeichnet.

Zur effizienten Implementierung der Prozessorarchitektur wird jedes Zeigerregister vorzugsweise von einem Attributregister begleitet, in dem die Attribute des Objekts abgelegt werden, die zu dem mit dem Zeiger im Zeigerregister referenzierten Objekt gehören. Bei dieser Ausgestaltung ist eine zusätzliche Pipeline-Stufe zum Laden der Attribute vorgesehen. Weiterhin wird in dieser Pipeline-Stufe vorzugsweise ein Attribut-Cache zur Beschleunigung der Zugriffe eingesetzt.

Alle weiteren für die Programmausführung erforderlichen Pipeline-Stufen und Funktionseinheiten sowie die üblichen Optimierungen wie bspw. Instruktions- und Daten-Caches oder Einheiten zur Sprungvorhersage können bei einer Implementierung der vorliegenden Prozessorarchitektur gemäß des Standes der Technik realisiert werden.

### Kurze Beschreibung der Zeichnungen

Die erfindungsgemäße Prozessorarchitektur wird nachfolgend anhand eines Ausführungsbeispiels in Verbindung mit den Zeichnungen eingehend erläutert. Hierbei zeigen:
- Fig. 1: schematisch das Registermodell der vorliegenden Prozessorarchitektur;
- Fig. 2: schematisch das Objektmodell der vorliegenden Prozessorarchitektur;
- Fig. 3: schematisch die Realisierung des Programmstapels als Stapelobjekt;
- Fig. 4: eine Tabelle mit einer Klassifi- kation der zeigerbezogenen Befehle;
- Fig. 5: ein Beispiel für die Realisierung des Objektlayouts für die vorlie- genden Prozessorarchitektur;
- Fig. 6: schematisch ein Zeigerregister mit Attributen;
- Fig. 7: ein Beispiel für die Realisierung einer Pipeline für die vorliegende Prozessorarchitektur (vereinfachte Darstellung);
- Fig. 8: die Zerlegung zeigerbezogener Be- fehle auf die Stufen einer Pipeline gemäß Figur 7; und
- Fig. 9: eine schematische Darstellung eines Beispiels der vorliegenden Vorrichtung.

### Wege zur Ausführung der Erfindung

Im Folgenden wird ein Beispiel für eine Ausgestaltung der erfindungsgemäßen Prozessorarchitektur beschrieben, die vor allem auf der Zielsetzung basiert, eine exakte Zeigeridentifizierung ohne die Verwendung von Kennzeichnungsbits (tags) zu erreichen, einen allgemein verwendbaren RISC-Befehlsatz zu Grunde zu legen, der effizient implementiert werden kann, sowie keine unteilbaren Operationen vorauszusetzen, deren Ausführungszeit einige Taktzyklen übersteigt.

Die dargestellte Prozessorarchitektur garantiert die Systeminvariante, dass
1. jedes Speicherwort oder Register dahingehend identifiziert werden kann, ob es einen Zeiger darstellt oder nicht, und
2. jeder Zeigerwert entweder Null ist oder eindeutig einem existierenden Objekt zugeordnet ist.

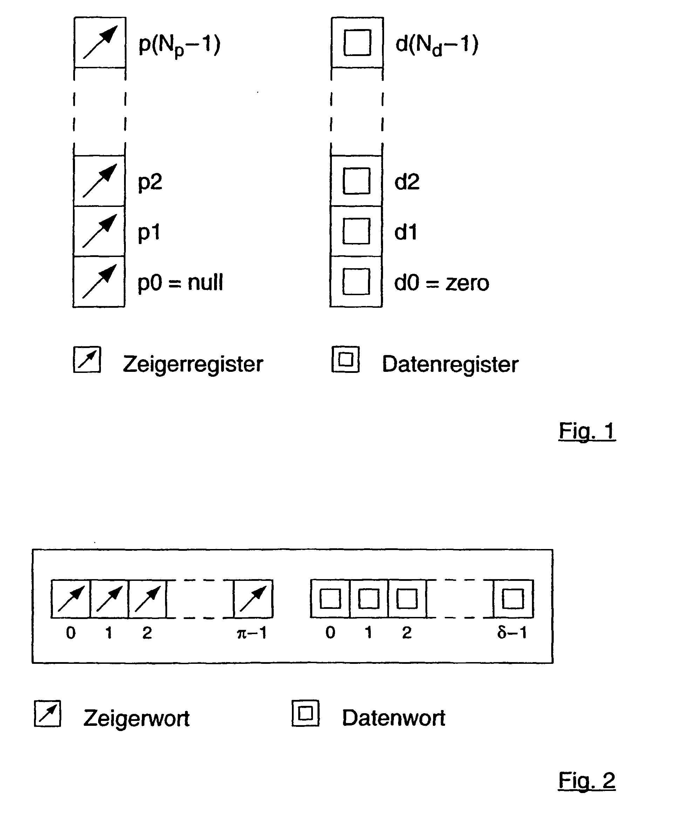

Die vorliegende Prozessorarchitektur stellt getrennte Daten- und Zeigerregistersätze bereit, wie dies in Figur 1 schematisch verdeutlicht wird. Die im rechten Teil dargestellten Datenregister werden als Mehrzweckregister eingesetzt, während die im linken Teil dargestellten Zeigerregister für den Zugriff auf Objekte im Speicher genutzt werden. Nₚ gibt hierbei die Anzahl der Zeigerregister, N_{d} die Anzahl der Datenregister an. Um der Systeminvariante zu genügen, muss sichergestellt werden, dass es nicht möglich ist, beliebige Werte in Zeigerregister zu schreiben, wie bspw. den Wert eines Datenregisters in ein Zeigerregister zu kopieren oder arithmetische Operationen mit Zeigerregistern durchzuführen.

Das Speichermodell der vorliegenden Prozessorarchitektur ist objektbasiert. Jedes Objekt setzt sich aus einem Datenbereich und einem Zeigerbereich zusammen, die streng voneinander getrennt sind. Figur 2 zeigt den schematischen Aufbau eines derartigen Objekts mit den entsprechenden Zeigerworten im Zeigerbereich (linker Teil der Figur) und den Datenworten im Datenbereich (rechter Teil der Figur) des Objekts. Die Anzahl der Datenworte im Datenbereich wird mit dem δ-Attribut (δ ≥ 0), die Anzahl der Zeiger im Zeigerbereich mit dem π-Attribut (π ≥ 0) beschrieben. Die durch die Attribute beschriebene Größe eines Objekts wird festgelegt, wenn das Objekt erzeugt wird und kann später nicht mehr geändert werden. Die Attribute sind Teil des Objekts und werden in diesem in einem gesonderten Attributbereich abgelegt.

Der für die vorliegende Prozessorarchitektur spezifische Teil des Befehlssatzes umfasst lediglich zeigerbezogene Befehle einschließlich Lade- und Speicherbefehle. Die Ausgestaltung anderer Befehle, wie bspw. arithmetischer Befehle oder von Befehlen zur Programmsteuerung kann unabhängig von der beschriebenen Architektur gewählt werden und ist nicht Teil der vorliegenden Erfindung.

Der Befehlssatz der beschriebenen Architektur weist einen speziellen Objekterzeugungsbefehl auf, der zur Erzeugung eines neuen Objekts und eines Zeigers auf dieses Objekt dient. Der Objekterzeugungsbefehl (Allocate Object) erhält die Werte des π- und δ-Attributs für das zu erzeugende Objekt als Argumente und legt den Zeiger auf das neu erzeugte Objekt in einem Zeigerregister ab. Jedes Zeigerwort im Zeigerbereich des erzeugten Objekts wird mit Null initialisiert, bevor der Zeiger auf das Objekt für das Programm sichtbar wird. Es gibt keinen Befehl zum Löschen eines Objekts. Objekte können nur durch eine automatische Speicherbereinigung auf Prozessorebene gelöscht werden.

Lade- und Speicherbefehle werden für den Zugriff auf Worte innerhalb eines Objekts eingesetzt. Die Prozessorarchitektur stellt für den Zugriff auf Zeigerworte und Datenworte unterschiedliche Lade- und Speicherbefehle zur Verfügung. Die "Lade Datum"- und "Speichere Datum"-Befehle bewegen Datenworte ausschließlich zwischen Datenbereichen von Objekten und Datenregistern. Die "Lade Zeiger"- und "Speichere Zeiger"-Befehle bewegen Zeiger ausschließlich zwischen Zeigerbereichen von Objekten und Zeigerregistern. Die Lade- und Speicherbefehle identifizieren das Speicherwort, auf das zugegriffen werden soll, mit Hilfe eines Zeigerregisters, das den Zeiger auf das Objekt enthält, und mit Hilfe eines ganzzahligen, positiven Index. Zur Berechnung der Indexwerte können - in Analogie zu den Adressierungsarten konventioneller Architekturen - verschiedene "Indizierungsarten" verwendet werden, die bspw. Datenregister, konstante Offsets und Skalierungsfaktoren verknüpfen.

Beim Zugriff auf ein Objekt müssen Bereichsüberprüfungen durchgeführt werden, um sicherzustellen, dass keine Zugriffe auf Worte außerhalb des jeweils referenzierten Objekts möglich sind. Solche Zugriffe können katastrophale Folgen nach sich ziehen und die Systeminvariante verletzen. Aus diesem Grund wird im Falle einer Bereichsüberschreitung der Speicherzugriff abgebrochen und eine entsprechende Ausnahmebehandlung eingeleitet. Aus ähnlichen Gründen werden Befehle abgebrochen, die versuchen, einen Null-Zeiger zu dereferenzieren.

Die Attribute eines Objekts können durch zwei "Lese Attribute"-Befehle abgefragt werden.

Im Gegensatz zu der Vielzahl von "Register-zu-Register"-Befehlen, die in der Regel für Operationen auf Datenregister implementiert werden, wird durch die vorliegende Architektur ein stark beschränkter Satz von zwei Befehlen für zeigerbezogene "Register-zu-Register"-Befehle definiert. Der "Kopiere Zeiger"-Befehl kopiert den Inhalt eines Zeigerregisters in ein anderes Zeigerregister, während der "Vergleiche Zeiger"-Befehl überprüft, ob zwei Zeiger auf dasselbe Objekt verweisen.

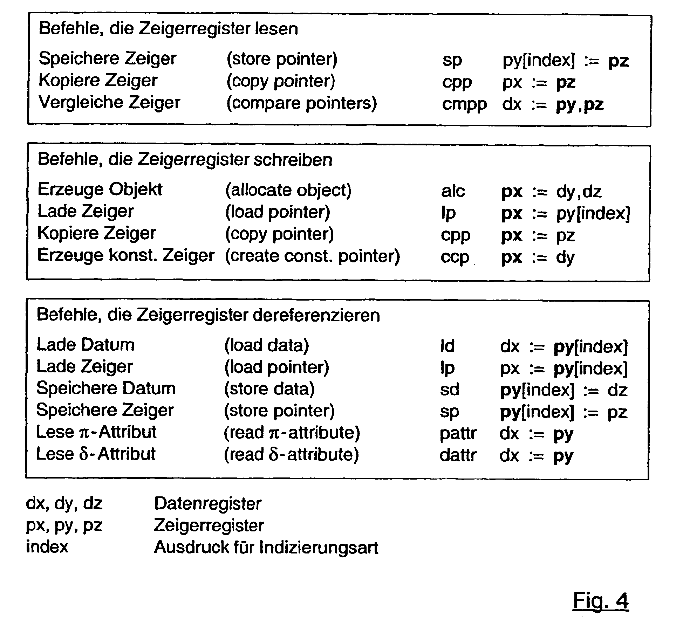

Figur 4 zeigt eine Zusammenfassung der von der vorliegenden Prozessorarchitektur definierten zeigerbezogenen Befehle und kategorisiert sie danach, ob sie Zeigerregister lesen, schreiben oder dereferenzieren. Das Register, das jeweils gelesen, geschrieben oder dereferenziert wird, ist fett gedruckt.

Aufgrund der unstrukturierten und hochdynamischen Natur von Programmstapeln stellen diese eine der größten Herausforderungen hinsichtlich der Zeigeridentifizierung im Rahmen einer automatischen Speicherbereinigung dar. Bei der vorliegenden Prozessorarchitektur wird der Programmstapel als Stapelobjekt angesehen, das - wie jedes Objekt - einen Datenbereich und einen Zeigerbereich aufweist und damit als zwei getrennte Stapel angesehen werden kann. Ein Zeigerregister wird reserviert, um den Zeiger auf das Stapelobjekt zu halten. In jedem der beiden Stapelbereiche wird ein Stapelindex eingesetzt, um den entsprechenden Bereich in den tatsächlichen Stapel und einen momentan unbelegten Bereich einzuteilen. Der Stapelindex bezieht sich im vorliegenden Beispiel auf die erste unbelegte Speicherstelle. Ein Stapelindex von 0 repräsentiert einen leeren Stapel. Die beiden Stapelindizes werden als Datenstapelindex (dsix) und Zeigerstapelindex (psix) bezeichnet. Jeder dieser Indizes wird in einem speziell dafür reservierten Datenregister gehalten.

Wenn das Stapelobjekt wie ein gewöhnliches Objekt behandelt wird, so kann das System nicht unterscheiden, ob ein Zeiger zum aktuell belegten Zeigerstapel oder zum unbelegten Teil des Zeigerstapelbereiches gehört. Da jedes Wort im Zeigerstapelbereich als Zeiger identifiziert wird, kann der ungenutzte Bereich des Zeigerstapelbereichs viele Zeiger enthalten, die auf nicht mehr benötigte Objekte zeigen. Ein Speicherbereiniger (garbage collector) könnte diese Objekte nicht frei geben, da noch Zeiger auf diese Objekte vorhanden sind. Eine mögliche Lösung dieses Problems besteht darin, jeden Zeigerwert mit Null zu überschreiben, sobald der entsprechende Zeiger vom Stapel entfernt wird. Dies führt jedoch zu einem unerwünschten Overhead, insbesondere dann, wenn mehrere Zeiger vom Stapel entfernt werden sollen, wie das bspw. beim Abbau eines Stapelrahmens am Ende eines Unterprogramms der Fall ist.

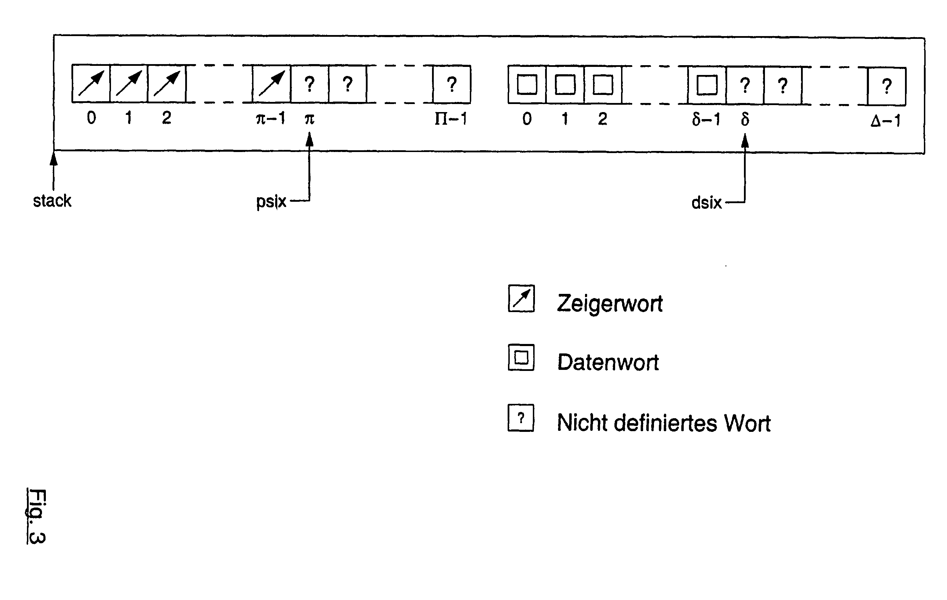

Für das hier beschriebene Beispiel einer vorteilhaften Ausgestaltung der Prozessorarchitektur wird daher eine Lösung gewählt, die die dynamische Größe eines Stapels berücksichtigt. Hierbei wird das Stapelobjekt, wie in Figur 3 veranschaulicht, durch zwei Attributpaare beschrieben, von denen ein Paar (π, δ) die aktuelle Stapelgröße und ein zweites Paar (Π, Δ) die maximale Stapelgröße angibt. Das π-Attribut entspricht dabei dem Wert des Zeigerstapelindex psix, das δ-Attribut dem Wert des Datenstapelindex dsix. Die Stapelattribute Π und Δ werden in Systemregistern gehalten, die für Anwenderprogramme nicht sichtbar sind. Hinsichtlich der Zeigeridentifizierung und der Systeminvariante werden lediglich Zeiger mit Indizes kleiner als π als Zeiger angesehen.

Speicherworte innerhalb des Stapels werden durch gewöhnliche Lade- und Speicherbefehle angesprochen. Worte können vom Stapel entfernt werden, indem der Wert des entsprechenden Stapelindex mittels gewöhnlicher arithmetischer Befehle verringert wird. Zur Einhaltung der Systeminvariante wird zur Ablage eines Zeigers auf dem Zeigerstapel ein spezieller Befehl bereitgestellt, der in nicht unterbrechbarer Weise zuerst den Zeiger an der ersten unbelegten Speicherstelle des Zeigerstapelbereiches ablegt und den Zeigerstapelindex erhöht. Dies ist gleichzeitig der einzige Befehl, mit dem der Zeigerstapelindex erhöht werden kann.

Bei der bisher beschriebenen Prozessorarchitektur kann ausschließlich über Zeiger auf den Speicher zugegriffen werden, und die einzige Möglichkeit zur Erzeugung von Zeigern besteht im Anlegen neuer Objekte mit Hilfe des Objekterzeugungsbefehls. Es sollte jedoch auch möglich sein, auf konstante Daten zuzugreifen, die bspw. als Teil des Programmcodes bereits vor dem Start des Programmes existieren. Beispiele für solche konstanten Daten sind konstante Zeichenketten oder vom Compiler generierte Strukturen wie bspw. Verzweigungstabellen oder Typbeschreibungen.

Das vorliegenden Beispiel einer vorteilhaften Ausgestaltung der Prozessorarchitektur führt daher konstante Objekte ein. Ein konstantes Objekt ist hierbei ein unveränderbares Objekt, das als Teil des Programmcodes oder in einem speziellen Bereich abgespeichert wird, der für konstante Objekte reserviert ist. Für die Erzeugung von Zeigern auf konstante Objekte, nachfolgend als konstante Zeiger bezeichnet, wird ein spezieller "Erzeuge konstanten Zeiger"-Befehl verwendet. Speicherzugriffe über konstante Zeiger sind auf Lesezugriffe beschränkt, und der Zeigerbereich eines konstanten Objekts darf ausschließlich konstante Zeiger oder Null-Zeiger enthalten. Konstante Objekte werden von gewöhnlichen Objekten durch ein ϕ-Attribut unterschieden, das zur Unterscheidung spezieller Arten von Objekten bereitgestellt wird.

In vielen Systemen werden getrennte Programmstapel für unterschiedliche Betriebsarten wie bspw. Anwendermodus und Betriebssystemmodus verwendet. Darüber hinaus erfordern Systeme mit mehreren nebenläufigen Ausführungsfäden (multi-threaded systems) separate Programmstapel für jeden Ausführungsfaden. Alle diese Stapel werden üblicherweise vom Betriebssystem verwaltet und befinden sich nicht in dem von der automatischen Speicherbereinigung überwachten Speicherbereich (Heap).

Um es dem Betriebssystem zu ermöglichen, Speicherbereiche außerhalb des Heap-Speicherbereiches zu verwalten, werden statische Objekte bereitgestellt. Statische Objekte werden ausschließlich im Betriebssystemmodus erzeugt und in einem speziell dafür vorgesehenen Speicherbereich angeordnet. Statische Objekte werden ebenfalls über das ϕ-Attribut identifiziert. Zeiger auf statische Objekte (statische Zeiger) sind für Anwenderprogramme niemals sichtbar.

Zur Einhaltung der Systeminvariante muss jeder Zeiger in einem neu erzeugten Objekt mit dem Null-Wert initialisiert werden, bevor der zugehörige Objekterzeugungsbefehl abgeschlossen werden kann. Deshalb ist die Ausführungszeit für den Objekterzeugungsbefehl nicht durch eine kleine Zeitkonstante begrenzt. Dies ist für harte Echtzeitanwendungen nicht akzeptabel.

Um den Objekterzeugungsbefehl unterbrechbar zu gestalten, werden in der beschriebenen vorteilhaften Ausgestaltung der Prozessorarchitektur uninitialisierte (genauer: unvollständig initialisierte) Objekte eingeführt. Uninitialisierte Objekte werden dann und nur dann erzeugt, wenn der Zuweisungsbefehl vor der Fertigstellung eines Objekts unterbrochen wird. Zeiger auf uninitialisierte Objekte sind nur im Betriebssystemmodus sichtbar und dürfen niemals dereferenziert werden. Uninitialisierte Objekte werden - wie statische und konstante Objekte - durch das ϕ-Attribut identifiziert.

Die beispielhaft beschriebene vorteilhafte Ausgestaltung der Prozessorarchitektur unterstützt folglich vier unterschiedliche Arten von Objekten: normale dynamische Objekte, uninitialisierte dynamische Objekte, konstante Objekte und statische Objekte. Das ϕ-Attribut wird zur Unterscheidung der Objektarten eingesetzt und kann einen der vier Werte (norm, uini, const, stat) annehmen. In einer Implementierung der Architektur kann das ϕ-Attribut im Zeiger auf ein Objekt und/oder im Objekt selbst abgelegt werden.

Normale dynamische Objekte und uninitialisierte dynamische Objekte befinden sich im Heap-Speicherbereich, statische Objekte im statischen Speicherbereich und konstante Objekte in dem für den Programmcode und/oder konstante Daten vorgesehenen Speicherbereich. Da statische und uninitialisierte Objekte auf den Betriebssystemmodus beschränkt sind, werden sie als Systemobjekte bezeichnet.

Unter dem Gesichtspunkt der automatischen Speicherbereinigung können die vier Objektarten dadurch charakterisiert werden, wie sie von einem kompaktierenden Speicherbereiniger behandelt werden. Gewöhnliche dynamische Objekte müssen nach Zeigern durchsucht und bei einer Kompaktierung verschoben werden. Statische Objekte müssen zwar nach Zeigern durchsucht, dürfen aber nicht verschoben werden. Uninitialisierte Objekte dagegen müssen während der Kompaktierung verschoben werden, dürfen aber nicht nach Zeigern durchsucht werden, da sie ungültige Zeiger enthalten können. Schließlich müssen konstante Objekte vom Speicherbereiniger weder nach Zeigern durchsucht noch verschoben werden.

Eine mögliche Implementierung der vorgeschlagenen Prozessorarchitektur wird im Folgenden beispielhaft erläutert. Für die Implementierung wird eine Wortgröße von 32 Bit angenommen. Der Speicher ist byteweise adressierbar, um innerhalb des Datenbereiches auch Byte- und Halbwortzugriffe zu ermöglichen. Worte müssen an durch vier teilbaren Adressen ausgerichtet werden.

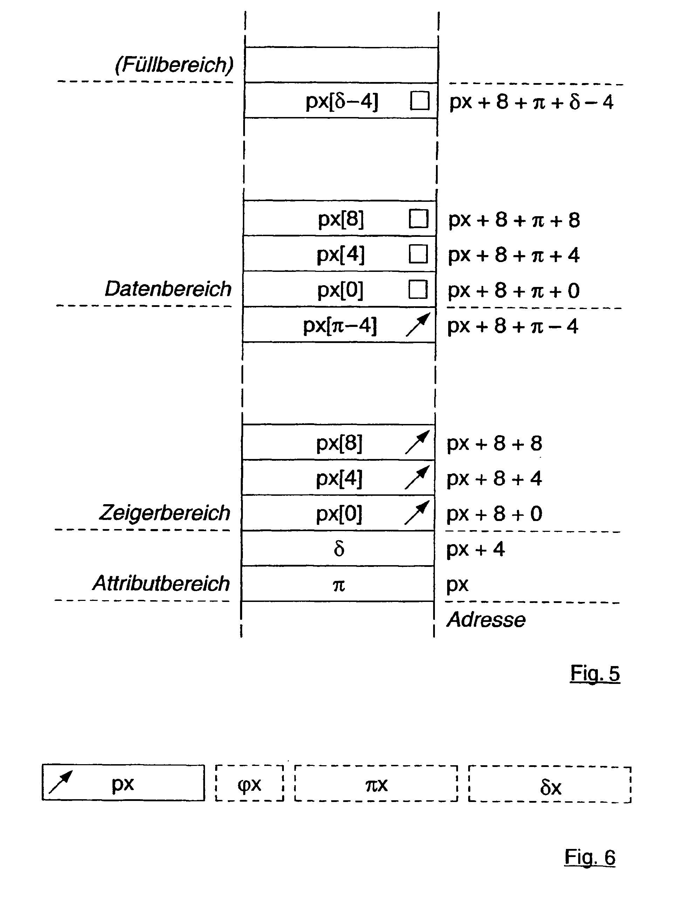

Ein beispielhaftes Layout eines Objekts im Speicher ist in der Figur 5 dargestellt. Jedes Objekt besteht aus einem Datenbereich, einem Zeigerbereich und einem Attributbereich. Aus Effizienzgründen sind die Objekte an durch acht teilbaren Adressen ausgerichtet, wodurch unter Umständen ein Füll-Bereich zwischen zwei Objekten erforderlich werden kann. Der Attributbereich, der für Nutzerprogramme unsichtbar ist, beinhaltet die π und δ-Attribute des Objekts. Aufgrund der Unterstützung von Byte- und Halbwortoperanden ändert die vorliegende Implementierung die Definition von π und δ leicht, da sie nun die Anzahl von Bytes anstelle der Anzahl der Worte in dem entsprechenden Bereich beschreiben.

Da π ein Vielfaches von vier sein muss, bleiben im Speicherwort, das für das π-Attribut verwendet wird, zwei Bits unbelegt. Diese können zur Ablage des ϕ-Attributs (oder Teilen davon) und/oder von einem Speicherbereiniger verwendet werden.

Die Zeiger enthalten direkt die physikalische Speicheradresse des Objekts. Da die Objekte nach Doppelworten ausgerichtet sind, belegt die Objektadresse lediglich 29 Bits eines Zeigerwortes. Die verbleibenden drei Bits können zur Ablage des ϕ-Attributs (oder Teilen davon) und/oder von einem Speicherbereiniger verwendet werden.

Vor dem Zugriff auf ein Objekt müssen die Attribute des Objekts bekannt sein, da diese für die Bereichsüberprüfung vor dem Zugriff benötigt werden, und, im Falle eines Objektlayouts gemäß Figur 5, im Falle eines Datenzugriffs zusätzlich für die Adresserzeugung erforderlich sind.

Da das Laden der Attribute aus dem Speicher vor jedem Objektzugriff mit einem großen Overhead verbunden ist, wird jedem Zeigerregister ein Attributregister beigestellt, wie dies in der Figur 6 schematisch dargestellt ist. Wenn ein Zeigerregister einen Wert enthält, der nicht Null ist, beinhaltet das korrespondierende Attributregister die Attribute des Objekts, auf das das Zeigerregister verweist. Auf diese Weise wird der Aufwand für die Dereferenzierung eines Zeigerregisters so gering wie der Aufwand für die Adresserzeugung in konventionellen Architekturen. Die Bereichsüberprüfung selbst ist mit keinen Leistungseinbußen verbunden, da sie parallel zur Adressberechnung durchgeführt werden kann.

Die Attributregister haben jedoch ihren Preis: Wenn ein Zeiger aus dem Speicher geladen wird, müssen auch die zugehörigen Attribute in die Attributregister geladen werden. Hinzu kommt, dass der Ort der Attribute im Speicher erst bekannt ist, wenn das Laden des Zeigers abgeschlossen ist.

Dieses Problem kann im Falle einer RISC-Architektur effizient durch eine zusätzliche Pipelinestufe nach der üblichen Speicherstufe gelöst werden. Diese zusätzliche Stufe wird als Attributstufe bezeichnet und verwendet einen Attribut-Cache, um Attributzugriffe in den meisten Fällen ohne Leistungseinbußen auszuführen. Der Aufbau des Attribut-Cache ist dem eines gewöhnlichen Daten-Caches ähnlich. Der Attribut-Cache wird durch die oberen 29 Bits eines Zeigers adressiert und ermöglicht das Lesen oder Schreiben der π und δ-Attribute in einem einzigen Schritt. Der wesentliche Unterschied zu einem Daten-Cache besteht in der Größe der Cache-Zeilen. Während Cache-Zeilen in Daten-Caches üblicherweise 8 Worte umfassen, weist eine Zeile des Attribut-Cache eine Breite von 2 Worten auf und enthält lediglich die Attribute eines einzelnen Objekts.

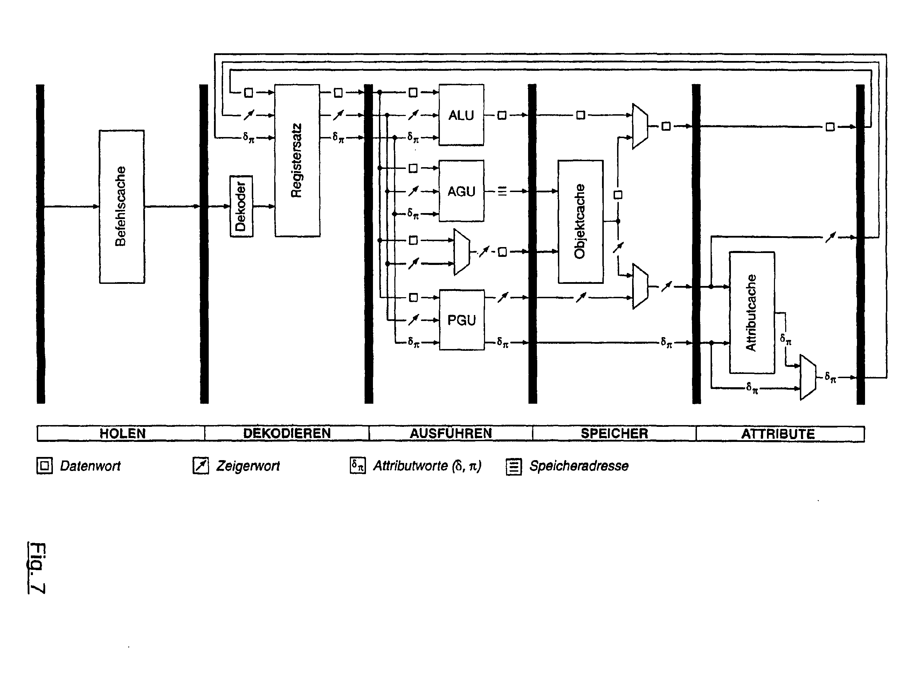

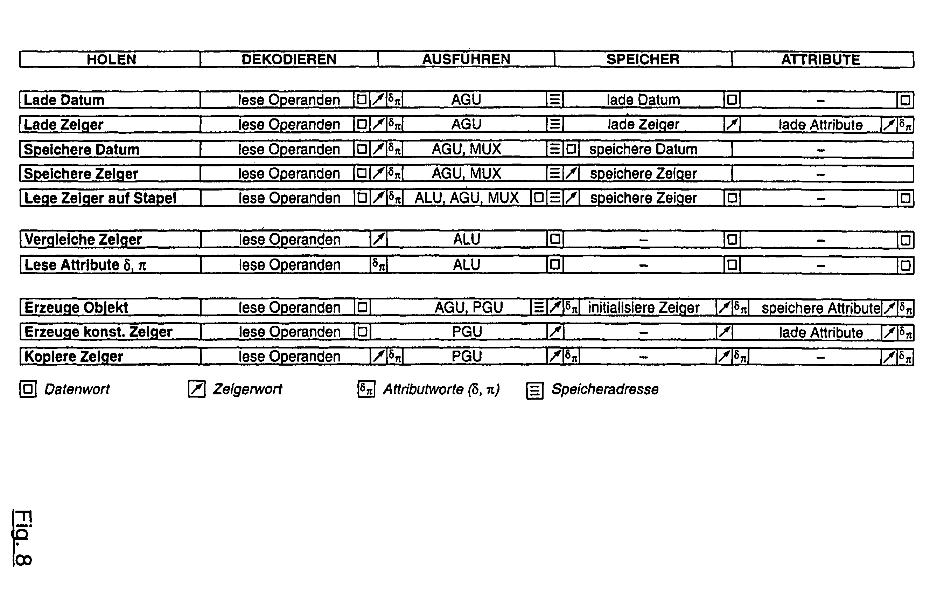

Figur 7 zeigt die Grundstruktur der implementierten Pipeline und Figur 8 die Zerlegung aller zeigerbezogenen Befehle auf die einzelnen Pipeline-Stufen. Zur Veranschaulichung wird die Abarbeitung der beiden aufwändigsten Befehle beispielhaft beschrieben.

### 1. "Lade Zeiger"-Befehl:

In der Ausführungsstufe der Pipeline berechnet die Adresserzeugungseinheit (AGU: Address Generation Unit) die Speicheradresse des zu ladenden Zeigers und führt parallel dazu die von der Architektur vorgeschriebenen Laufzeittests wie bspw. Bereichsüberprüfungen und Nullzeigertests durch. In der Speicherstufe wird die berechnete Adresse benutzt, um den Zeiger aus dem Objekt-Cache zu lesen. Der geladene Zeiger adressiert dann den Attribut-Cache, um die Attribute aus dem Objekt zu laden, auf das der geladene Zeiger zeigt. Schließlich wird der geladene Zeiger zusammen mit den geladenen Attributen in den Registersatz geschrieben.

### 2. Objekterzeugungsbefehl:

Die Größe des zu erzeugenden Objekts wird mit Hilfe zweier Datenoperanden bestimmt, die aus der Dekodierstufe in die Ausführungsstufe weitergereicht werden. In der Ausführungsstufe ist die Zeigererzeugungseinheit (PGU: Pointer Generation Unit) für die Erzeugung des Zeigers auf das neue Objekt zuständig. Im Falle eines kompaktierenden Speicherbereinigers kann die PGU die Startadresse des neuen Objekts sehr einfach dadurch bestimmen, dass die Objektgröße zum Inhalt eines Systemregisters addiert wird, das stets auf das letzte belegte Wort in dem Bereich des Heaps zeigt, der für das Anlegen neuer Objekte verwendet wird. Die PGU wird durch die AGU unterstützt, die die für die Zeigerinitialisierung erforderlichen Adressen erzeugt. Bei einem Objekt-Cache mit Cache-Zeilen von 8 Worten können in einem Taktzyklus bis zu 8 Zeigerworte gleichzeitig initialisiert werden. Auf diese Weise durchläuft der Erzeugungsbefehl die Ausführungsstufe ohne Verzögerung, wenn die Startadresse des Objekts innerhalb eines Taktzyklus berechnet werden kann und wenn alle Zeiger im Objekt der gleichen Cache-Zeile angehören. Falls dies nicht der Fall ist, wird die Pipeline angehalten, bis die Initialisierung abgeschlossen ist oder eine Unterbrechung auftritt. Schließlich werden die Attribute des neu generierten Objekts in den Attribut-Cache und der Zeiger zusammen mit seinen Attributen in den Registersatz geschrieben. Falls ein unterbrochener Objekterzeugungsbefehl am Ende der Pipeline ankommt, wird der Zustand der unterbrochenen Objekterzeugung in ein Systemregister geschrieben und das unvoIIständig initialisierte Objekt mit dem ϕ-Attribut für uninitialisierte Objekte gekennzeichnet. Die Initialisierung wird wieder aufgenommen, sobald der Ausführungskontext (Befehlsfolgezähler, Systemregister) des unterbrochenen Programms wieder hergestellt ist.

Die Funktionsfähigkeit der vorgeschlagenen Architektur wurde anhand eines funktionierenden Prototypen nachgewiesen. In diesem Prototypen ist der Speicherbereiniger als mikroprogrammierter Koprozessor realisiert, der eng mit der Pipeline des Hauptprozessors zusammenarbeitet. Die Synchronisation zwischen Prozessor und Koprozessor ist komplett in Hardware realisiert. Der Prozessor und der Koprozessor für die Speicherbereinigung sind in VHDL beschrieben und gemeinsam für einem modernen programmierbareren Logikbausteins synthetisiert. Es existieren weiterhin ein prototypischer Java-Compiler sowie die Implementierung einer Untermenge der Java-Klassenbibliotheken für die Architektur.

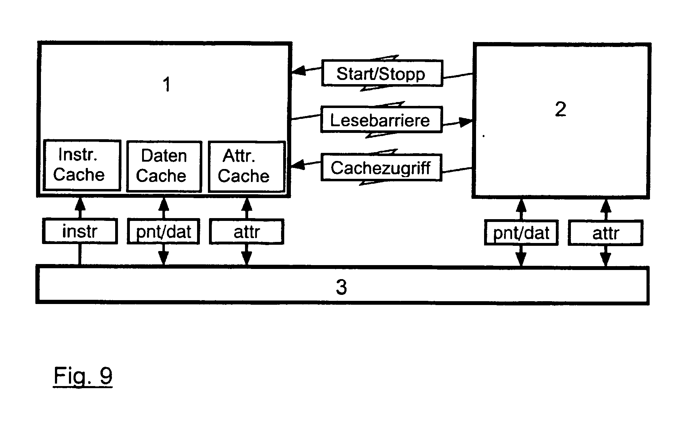

Figur 9 zeigt eine schematische Darstellung eines Beispiels der vorliegenden Vorrichtung. Der Speicherbereiniger wird in diesem Beispiel durch einen mikroprogrammierbaren Coprozessor 2 gebildet. In den Hauptprozessor 1 ist die erfindungsgemäße Prozessorarchitektur implementiert. Ein Speicher-Controller 3 mit jeweils mehreren getrennten Ports für den Hauptprozessor 1 und den Coprozessor 2 stellt die Verbindung zum Hauptspeicher her. Die Synchronisation zwischen Haupt-und Coprozessor findet auf unterschiedlichen Ebenen statt. Der Speicherbereiniger verriegelt oder räumt Zeilen des Daten- und Attribut-Caches, wenn nötig, um die Cache-Kohärenz zu gewährleisten. Eine in die Prozessor-Pipeline integrierte Hardware-Lesebarriere kann Interrupts im Speicherbereiniger triggern. Der Speicherbereiniger kann den Hauptprozessor 1 auch stoppen, um kritische Bereiche im Mikrocode zu schützen.

## Patentansprüche

1. Prozessorarchitektur, bei der der Zugriff auf einen Speicher über Zeiger erfolgt, die auf Objekte verweisen,
wobei der Prozessor in den Objekten Zeiger in einem Zeigerbereich und Daten in einem Datenbereich getrennt voneinander ablegt, wobei die Zeiger eine Speicheradresse des Objekts enthalten, auf das sie verweisen und die Objekte mit Attributen versehen werden, die im Objekt selbst abgelegt werden und die eine Länge des Zeigerbereiches und eine Länge des Datenbereiches beschreiben,
wobei der Prozessor einen Registersatz mit getrennten Daten- und Zeigerregistern bereitstellt, von denen die Zeigerregister für den Zugriff auf Objekte im Speicher verwendet werden,
und gewährleistet, dass jeder Zeiger in einem Zeigerregister oder im Zeigerbereich eines Objekts nur entweder einen vorgegebenen Null-Wert oder die Speicheradresse eines Objekts enthält, und
wobei ein Befehlssatz mit getrennten Befehlen für Daten- und Zeigeroperationen eingesetzt wird.

2. Prozessorarchitektur nach Anspruch 1,
**dadurch gekennzeichnet,**
**dass** Lade- und Speicheroperationen für Zeiger ausschließlich Zeiger aus den Zeigerbereichen der Objekte in Zeigerregister laden bzw. den Inhalt von Zeigerregistern in den Zeigerbereichen der Objekte speichern, und
**dass** Lade- und Speicheroperationen für Daten ausschließlich Daten aus den Datenbereichen der Objekte in Datenregister laden bzw. den Inhalt von Datenregistern in den Datenbereichen der Objekte speichern.

3. Prozessorarchitektur nach Anspruch 1 oder 2,
**dadurch gekennzeichnet,**
**dass** ein Befehlssatz mit einem Objekterzeugungsbefehl verwendet wird, der alle Zeiger im Zeigerbereich eines erzeugten Objekts mit einem Null-Wert initialisiert, bevor auf das erzeugte Objekt zugegriffen werden kann.

4. Prozessorarchitektur nach Anspruch 3,
**dadurch gekennzeichnet,**
**dass** der Objekterzeugungsbefehl unterbrochen und zu einem späteren Zeitpunkt fortgesetzt werden kann.

5. Prozessorarchitektur nach Anspruch 4,
**dadurch gekennzeichnet,**
**dass** beim Unterbrechen des Objekterzeugungsbefehls unvollständig initialisierte Objekte erzeugt werden, die vom Prozessor eindeutig von vollständig initialisierten Objekten unterschieden werden.

6. Prozessorarchitektur nach einem der Ansprüche 1 bis 5,
**dadurch gekennzeichnet,**
**dass** der Prozessor konstante Objekte unterstützt,
die in einem separaten Speicherbereich gehalten werden, der zur Programmlaufzeit ausschließlich gelesen wird, und
**dass** Zeiger auf konstante Objekte vom Prozessor in eindeutiger Weise **gekennzeichnet** werden.

7. Prozessorarchitektur nach einem der Ansprüche 1 bis 8,
**dadurch gekennzeichnet,**
**dass** ein Programmstapel verwendet wird, der in einen Zeigerstapelbereich und in einen Datenstapelbereich unterteilt ist, wobei eine Länge des belegten Teils in jedem der beiden Stapelbereiche durch je einen Stapelindex angezeigt wird, der in je einem dafür reservierten Datenregister verwaltet wird.

8. Prozessorarchitektur nach Anspruch 7,
**dadurch gekennzeichnet,**
**dass** zur Ablage eines Zeigers auf dem Zeigerstapel ein Befehl verwendet wird, der in nicht unterbrechbarer Weise sowohl den entsprechenden Zeiger auf dem Zeigerstapel ablegt als auch den Zeigerstapelindex erhöht.

9. Prozessorarchitektur nach einem der Ansprüche 1 bis 8,
**dadurch gekennzeichnet,**
**dass** der Prozessor statische Objekte unterstützt, die in einem separaten, von einem Betriebssystem verwalteten Speicherbereich gehalten werden, und dass Zeiger auf statische Objekte vom Prozessor in eindeutiger Weise **gekennzeichnet** werden.

10. Prozessorarchitektur nach Anspruch 7 in Verbindung mit Anspruch 9 oder Anspruch 8 in Verbindung mit Anspruch 9,
**dadurch gekennzeichnet, dass**
für den Programmstapel statische Objekte verwendet werden, wobei die im Objekt enthaltenen Attribute bei einem nicht aktiven Programmstapel jeweils die Länge eines tatsächlich belegten Teils des Stapelbereichs beschreiben.

11. Prozessorarchitektur nach einem der Ansprüche 1 bis 10,
**dadurch gekennzeichnet,**
**dass** jedem Zeigerregister ein Attributregister zugeordnet wird, in das die Attribute des Objekts geschrieben werden, auf das der Zeiger im Zeigerregister verweist.

12. Prozessorarchitektur nach Anspruch 11,
**dadurch gekennzeichnet,**
**dass** eine Pipeline mit einer zusätzlichen Pipeline-Stufe zum Laden der Attribute eingesetzt wird.

13. Prozessorarchitektur nach Anspruch 11 oder 12,
**dadurch gekennzeichnet,**
**dass** ein Attribut-Cache eingesetzt wird.

14. Prozessorarchitektur nach einem der Ansprüche 1 bis 13,
**dadurch gekennzeichnet,**
**dass** ein RISC-Befehlssatz verwendet wird.

15. Prozessorarchitektur nach einem der Ansprüche 1 bis 14,
**dadurch gekennzeichnet,**
**dass** der Prozessor eine automatische Speicherbereinigung durchführt.

16. Prozessor, in den die Prozessorarchitektur nach einem der vorangehenden Ansprüche implementiert ist.

17. Vorrichtung mit einem Hauptprozessor (1), in den die Prozessorarchitektur nach einem der Ansprüche 1 bis 14 implementiert ist, und einem Coprozessor (2), der zur Durchführung einer automatischen Speicherbereinignung ausgebildet und für eine effiziente Synchronisierung eng mit dem Hauptprozessor (1) gekoppelt ist.

18. Verwendung der Prozessorarchitektur nach einem der Ansprüche 1 bis 15 für eingebettete Systeme.

## Claims

1. A processor architecture in which access to a memory occurs via pointers, which refer to objects,
wherein the processor stores pointers in a pointer area and data in a data area separately from one another in the objects, wherein the pointers contain a memory address of the object to which they refer and the objects are provided with attributes, which are stored in the object itself and which describe a length of the pointer area and a length of the data area,
wherein the processor provides a register set with separate data and pointer registers, of which the pointer registers are used to access objects in the memory,
and ensures that each pointer in a pointer register or in the pointer area of an object only contains either a predefined zero value or the memory address of an object and wherein an instruction set is used with separate instructions for data and pointer operations.

2. The processor architecture according to claim 1,
**characterised in that**
load and store operations for pointers exclusively load pointers from the pointer areas of the objects into pointer registers or else store the content of pointer registers into the pointer areas of the objects and
load and store operations for data exclusively load data from the data areas of the objects in data registers or else store the content of data registers in the data areas of the objects.

3. The processor architecture according to claim 1 or 2,
**characterised in that**
an instruction set with an object creation instruction is used, which initialises all pointers in the pointer area of a created object with a zero value before the created object can be accessed.

4. The processor architecture according to claim 3,
**characterised in that**
the object creation instruction can be interrupted and continued at a later time.

5. The processor architecture according to claim 4,
**characterised in that**
in the event of the object creation instruction being interrupted, incompletely initialised objects are created, which are clearly differentiated by the processor from completely initialised objects.

6. The processor architecture according to claims 1 to 5,
**characterised in that**
the processor supports constant objects, which are kept in a separate memory area that is exclusively read at program runtime and pointers to constant objects are clearly identified by the processor.

7. The processor architecture according to claims 1 to 8,
**characterised in that**
a program stack is used, which is divided into a pointer stack area and a data stack area, wherein a length of the occupied part in each of the two stack areas is indicated by a stack index in each case, which is managed in a data register reserved for this purpose in each case.

8. The processor architecture according to claim 7,
**characterised in that**
an instruction is used to store a pointer on the pointer stack, which both stores the corresponding pointer on the pointer stack and also increases the pointer stack index in a non-interruptible way.

9. The processor architecture according to one of the claims 1 to 8,
**characterised in that**
the processor supports static objects that are kept in a separate memory area, which is managed by an operating system, and pointers to static objects are clearly identified by the processor.

10. The processor architecture according to claim 7 in conjunction with claim 9 or claim 8 in conjunction with claim 9,
**characterised in that**
static objects are used for the program stack, wherein the attributes contained in the object each describe the length of an actually occupied part of the stack area in the case of an inactive program stack.

11. The processor architecture according to one of the claims 1 to 10,
**characterised in that**
an attribute register is assigned to each pointer register, into which the attributes of the object to which the pointer in the pointer register refers are written.

12. The processor architecture according to claim 11,
**characterised in that**
a pipeline with an additional pipeline stage is used to load the attributes.

13. The processor architecture according to claim 11 or 12,
**characterised in that**
an attribute cache is used.

14. The processor architecture according to one of the claims 1 to 13,
**characterised in that**
an RISC instruction set is used.

15. The processor architecture according to one of the claims 1 to 14,
**characterised in that**
the processor performs automatic garbage collection.

16. A processor in which the process architecture according to one of the preceding claims is implemented.

17. A device with a main processor (1), in which the processor architecture according to one of the claims 1 to 14 is implemented, and a co-processor (2), which is designed to perform an automatic garbage collection and is closely linked to the main processor (1) for efficient synchronisation.

18. Use of the processor architecture according to one of the claims 1 to 15 for embedded systems.

## Revendications

1. Architecture de processeur, avec laquelle l'accès à une mémoire s'effectue par des indicateurs qui renvoient à des objets,
le processeur déposant dans les objets des indicateurs dans une zone d'indicateurs et des données dans une zone de données séparément les uns des autres, les indicateurs contenant une adresse de mémoire de l'objet auquel ils renvoient et lesquels objets étant dotés d'attributs qui sont déposés dans l'objet même et qui décrivent une longueur de la zone d'indicateurs et une longueur de la zone de données,
le processeur mettant à disposition un ensemble de registres avec des registres de données et des registres d'indicateurs séparés, dont les registres d'indicateurs sont utilisés pour l'accès à des objets dans la mémoire,
et garantissant que chaque indicateur dans un registre d'indicateurs ou dans la zone d'indicateurs d'un objet ne contient que soit une valeur zéro prédéfinie soit l'adresse de mémoire d'un objet, et un ensemble d'instructions avec des instructions séparées étant utilisé pour des opérations de données et d'indicateurs.

2. Architecture de processeur selon la revendication 1,
**caractérisée en ce que**
des opérations de chargement et de stockage pour des indicateurs chargent exclusivement des indicateurs provenant des zones d'indicateurs des objets dans des registres d'indicateurs et stockent le contenu de registres d'indicateurs dans les zones d'indicateurs des objets et
**en ce que** des opérations de chargement et de stockage pour des données chargent exclusivement des données provenant des zones de données des objets dans des registres de données ou stockent le contenu de registres de données dans les zones de données des objets.

3. Architecture de processeur selon la revendication 1 ou 2,
**caractérisée en ce que**
un ensemble d'instructions avec une instruction de génération d'objet est utilisé, qui initialise tous les indicateurs dans la zone d'indicateurs d'un objet généré avec une valeur zéro avant de pouvoir avoir accès à l'objet généré.

4. Architecture de processeur selon la revendication 3,
**caractérisée en ce que,**
l'instruction de génération d'objet peut être interrompue et poursuivie à un moment ultérieur.

5. Architecture de processeur selon la revendication 4,
**caractérisée en ce que,**
lors de l'interruption de l'instruction de génération d'objet, des objets initialisés de façon incomplète sont générés, lesquels sont différenciés par le processeur clairement des objets initiés complètement.

6. Architecture de processeur selon l'une quelconque des revendications 1 à 5,
**caractérisée en ce que**
le processeur supporte des objets constants qui sont maintenus dans une zone de mémoire séparée, laquelle est lue exclusivement pour le temps d'exécution de programme, et
**en ce que** des indicateurs d'objets constants sont **caractérisés** de façon claire par le processeur.

7. Architecture de processeur selon l'une quelconque des revendications 1 à 6,
**caractérisée en ce**
**qu'**une pile de programmes est utilisée, laquelle est subdivisée en une zone de pile d'indicateurs et en une zone de pile de données, une longueur de la partie occupée dans chacune des deux zones de pile étant affichée par respectivement un indice de pile qui est géré dans respectivement un registre de données réservé à cet effet.

8. Architecture de processeur selon la revendication 7,
**caractérisée en ce que,**
pour le dépôt d'un indicateur sur la pile d'indicateurs, on utilise une instruction qui déposé d'une façon qui ne peut pas être interrompue l'indicateur correspondant sur la pile d'indicateurs et augmente l'indice de pile d'indicateurs.

9. Architecture de processeur selon l'une quelconque des revendications 1 à 8,
**caractérisée en ce que**
le processeur supporte des objets statiques qui sont maintenus dans une zone de mémoire séparée, gérée par un système d'exploitation, et **en ce que** des indicateurs d'objets statiques sont marqués de façon claire par le processeur.

10. Architecture de processeur selon la revendication 7 en liaison avec la revendication 9 ou la revendication 8 en liaison avec la revendication 9,
**caractérisée en ce que**
des objets statiques sont utilisés pour la pile de programmes, les attributs contenus dans l'objet décrivant dans le cas d'une pile de programmes non active à chaque fois la longueur d'une partie réellement occupée de la zone de pile.

11. Architecture de processeur selon l'une quelconque des revendications 1 à 10,
**caractérisée en ce que**
à chaque registre d'indicateurs est attribué un registre d'attributs dans lequel sont enregistrés les attributs de l'objet auquel l'indicateur renvoie dans le registre d'indicateurs.

12. Architecture de processeur selon la revendication 11,
**caractérisée en ce que**
un pipeline avec un niveau de pipeline supplémentaire est utilisé pour le chargement des attributs.

13. Architecture de processeur selon la revendication 11 ou 12,
**caractérisée en ce que,**
un cache d'attribut est utilisé.

14. Architecture de processeur selon l'une quelconque des revendications 1 à 13,
**caractérisée en ce**
**qu'**un ensemble d'instructions RISC est utilisé.

15. Architecture de processeur selon l'une quelconque des revendications 1 à 14,
**caractérisée en ce que**
le processeur effectue une correction automatique de mémoire.

16. Processeur dans lequel l'architecture de processeur est mise en place selon l'une quelconque des revendications précédentes.

17. Dispositif doté d'un processeur principal (1), dans lequel l'architecture de processeur est mise en place selon l'une quelconque des revendications 1 à 14, et d'un coprocesseur (2), lequel est conçu pour effectuer une correction automatique de mémoire et est couplé étroitement avec le processeur principal (1) pour une synchronisation efficace.

18. Utilisation de l'architecture de processeur selon l'une quelconque des revendications 1 à 15 pour des systèmes intégrés.
